(19) Europäisches Patentamt
European Patent Office
Office européen des brevets

(11) Numéro de publication: **0 284 526 B1**

(12) **FASCICULE DE BREVET EUROPEEN**

(45) Date de publication de fascicule du brevet: **30.12.92**   (51) Int. Cl.⁵: **D21C 5/02**, D21B 1/32

(21) Numéro de dépôt: **88420086.6**

(22) Date de dépôt: **10.03.88**

(54) **Procédé et installation pour le recyclage de vieux papiers imprimés.**

(30) Priorité: **13.03.87 FR 8703696**

(43) Date de publication de la demande:
**28.09.88 Bulletin 88/39**

(45) Mention de la délivrance du brevet:
**30.12.92 Bulletin 92/53**

(84) Etats contractants désignés:
**AT BE CH DE ES FR GB GR IT LI NL SE**

(56) Documents cités:
**EP-A- 0 187 909**
**EP-A- 0 233 517**
**FR-A- 2 421 241**

**TAPPI JOURNAL, vol. 68, no. 2, février 1985, pages 61-63, Easton, Pennsylvania, US; R.A. KOFFINKE: "Modern newsprint system combines flotation and washing deinking"**

**TAPPI JOURNAL, vol. 63, no. 9, septembre 1980, pages 113-116; L. PFALZER: "Deinking of secondary fibers. A comparison of washing and flotation"**

(73) Titulaire: **CENTRE TECHNIOUE DE L'INDUS-TRIE DES PAPIERS CARTONS ET CELLULO-SE .**
**Domaine Universitaire**
**F-38000 Grenoble(FR)**

Titulaire: **SOCIETE DE PATE A PAPIER SA-VOIE DAUPHINE**
**41 avenue du Dauphiné**
**F-38530 Pontcharra(FR)**

(72) Inventeur: **Bernard, Emile**
**18 Allée François Villon**
**F-38130 Echirolles(FR)**
Inventeur: **Galland, Gérard**
**3 rue des Trois Epis**
**F-38100 Grenoble(FR)**
Inventeur: **Vernac, Yves**
**17 rue Casimir Brenier**
**F-38000 Grenoble(FR)**
Inventeur: **Doublier, Charles**
**9 rue Général Mangin**
**F-38000 Grenoble(FR)**

(74) Mandataire: **Laurent, Michel et al**
**Cabinet LAURENT et CHARRAS, 20, rue Louis Chirpaz B.P. 32**
**F-69131 Ecully Cedex(FR)**

**Description**

L'invention concerne un nouveau procédé de recyclage de vieux papiers imprimés, notamment non sélectionnés ; elle se rapporte également à une installation pour la mise en oeuvre de ce procédé.

Le recyclage des vieux papiers imprimés, sélectionnés ou non, est une technique en soi bien connue qu'il n'est donc pas utile de décrire ici longuement en détail. Dans un souci d'économie de matières premières, cette technique devient de plus en plus d'actualité.

Sommairement, ce recyclage nécessite deux opérations essentielles, à savoir une opération indispensable de désencrage, et une opération facultative de blanchiment. Cette dernière opération de blanchiment devient indispensable lorsque l'on souhaite obtenir des pâtes recyclées d'un haut niveau de blancheur. Ces deux opérations peuvent être simultanées ou consécutives.

Comme on le sait, le désencrage consiste à décrocher l'encre du support fibreux lors de la mise en suspension des vieux papiers dans un pulpeur, en présence de réactifs chimiques, notamment de réactifs alcalins et ce, à une consistance comprise entre 5 et 15 %, puis à éliminer l'encre de cette suspension pâteuse, notamment par flottation ou lavage.

Le blanchiment quant à lui consiste à traiter la pâte par des agents chimiques qui peuvent être soit oxydants (peroxyde d'hydrogène, hypochlorite de sodium), soit réducteurs (hydrosulfite de sodium), afin d'anoblir cette pâte ou compenser la perte de blancheur provoquée par le traitement alcalin lors du désencrage. Selon le cas, ce blanchiment peut être effectué à haute ou à basse concentration.

Dans le procédé décrit dans la demande de brevet EP A-0092 124, schématisé à la figure 1, les vieux papiers sont mis en suspension aqueuse par trituration dans un pulpeur (1) en l'absence de produits chimiques. La suspension est ensuite épurée (2) puis épaissie (3) à 25-30 % et envoyée dans un appareil type triturateur (4) à chaud où elle reçoit les produits chimiques de traitement, la vapeur et de l'énergie mécanique. La pâte ainsi traitée est alors soumise à trois lavages-dilutions successifs dans des épaississeurs (5,6 et 7) fonctionnant à contrecourant. En d'autres termes, les eaux de ces lavages (5,6 et 7) sont chaque fois réutilisées dans la dilution précédente. On obtient ainsi une première pâte P1 dite "pâte primaire". Selon l'invention proposée, les eaux du premier lavage (5) sont récupérées, puis soumises à un traitement de flottation (8) sélective qui permet d'éliminer l'encre (9), et donne une seconde pâte P2 dénommée "pâte secondaire". Ce procédé intéressant présente néanmoins certains inconvénients :

- d'une part, il ne comporte qu'une seule phase d'élimination de l'encre, ce qui est souvent jugé insuffisant pour obtenir l'efficacité optimale du désencrage,
- d'autre part, la flottation sélective s'effectuant sur des eaux contenant la totalité de l'encre éliminée de la pâte, cela limite les posibilités d'éliminer totalement l'encre de la pâte P2, notamment dans le cas de traitement de papier fortement encré ;
- enfin, comme on le voit, on obtient deux pâtes respectivement P1 et P2 de qualité fort différente aussi bien en composition fibreuse qu'en blancheur. Cela impose généralement un usage séparé de ces deux pâtes et fréquemment il n'est pas possible d'utiliser la pâte P2 de manière isolée compte-tenu de sa moindre qualité.

Dans le brevet EP-A-0172 118 de l'un des co-Demandeurs, on a proposé un procédé schématisé à la figure 2, ou l'on désigne, comme par la suite, les mêmes éléments par les mêmes références numériques. Ici, la suspension triturée (1) est diluée (2) et épurée (10), puis est soumise à un premier traitement de flottation (11) pour éliminer la majeure partie de l'encre (12). Après épaississage (13), la pâte est blanchie (4), diluée puis lavée (5). La pâte obtenue P3 est envoyée par des conduits appropriés dans le circuit d'utilisation, par exemple vers la machine à papier. Les eaux de lavage contenant l'encre résiduelle, les réactifs chimiques et les matières en suspension sont ensuite recyclées en totalité en amont de l'installation et plus précisément au pulpeur (1).

Ce procédé qui donne d'excellents résultats, notamment en ce qui concerne la blancheur finale et la réduction de la consommation de produits chimiques, présente toutefois l'inconvénient, comme précédemment, de ne comporter qu'une seule étape (11) d'élimination de l'encre (12). En outre, le recyclage des eaux de lavage surcharge inutilement l'installation en réintroduisant en tête (1) des quantités appréciables de fines et de charges qui, à la longue, peuvent affecter le bon fonctionnement de l'installation et en particulier la capacité de production.

Dans le document EP-A-0187 909, on a proposé un procédé de désencrage qui consiste tout d'abord à éliminer une partie de l'encre de la suspension par une première flottation de désencrage, puis à laver la pâte désencrée, et enfin à effectuer un traitement de clarification pour éliminer totalement les matières sur l'ensemble des eaux issues de ce lavage et des mousses issues de la première flottation. Ce traitement de clarification peut être une flottation ou une décantation. Ainsi, on élimine l'encre sous forme de boues en un point unique, à savoir lors de cette clarification-flottation totale. Malheureusement, on élimine également toutes les autres matières, telles que fibres, charges qui peuvent être utiles et qui sont entraînées lors du lavage. Ce procédé est adapté lorsque l'on recherche avant tout un faible taux de charges, comme c'est le cas pour les papiers destinés à un usage sanitaire ou domestique dénommés"tissues". En revanche, ce procédé entraîne irrévocablement une perte de matières appréciable et voulue, que l'on situe au minimum à 30 % des matières de départ. Il s'ensuit que ce procédé est peu attractif pour la fabrication de papiers recyclés destinés à l'impression.

Dans le document EP-A-0233 517, publié le 26 Août 1987, on a proposé un procédé de désencrage, dans lequel la pâte est traitée dans un appareil de fractionnement par lavage en phase très diluée pour être séparée :

- d'une part, en une fraction contenant les fibres longues et les contaminants, et qui représente de 10 à 70 %, de préférence 50 % des matières, à une concentration de 0,8 à 1,5 %, cette fraction étant épurée par classage puis étant épaissie;
- d'autre part, en une fraction contenant les fibres courtes et la totalité de l'encre, et qui est soumise à une flottation sélective afin d'éliminer l'encre, la suspension des matières restantes étant mélangée à la fraction longue juste avant l'opération d'épaississement.

Ce procédé présente les mêmes inconvénients que les deux premiers cités à l'encontre du document EP-A-0092 124 évoqué à la page 2 ci-dessus.

L'invention pallie ces inconvénients. Elle vise un procédé de recyclage de vieux papiers imprimés, par désencrage, qui permette d'accroître le gain de blancheur, obtenu avec un désencrage classique sans augmentation importante des pertes de matières, de ne pas surcharger inutilement l'installation et d'obtenir une seule pâte de qualité, contenant l'essentiel des matières fibreuses et des charges réutilisables.

Ce procédé pour améliorer la qualité des pâtes papetières désencrées, otenues par recyclage de vieux papiers imprimés, et dans lequel :

. on transforme lesdits papiers en une suspension pâteuse,

. on élimine sous forme de mousse la majeure partie de l'encre de cette suspension, par flottation primaire sélective de l'encre,

. on lave la pâte désencrée avant de l'envoyer dans le circuit d'utilisation de la pâte ;

. et on effectue une seconde flottation sur les eaux issues de ce lavage,

caractérisé:

- en ce qu'on élimine du circuit les mousses issues de la première flottation ;
- en ce que la seconde flottation est effectuée seulement sur les eaux issues du lavage au moyen d'une flottation sélective pour en éliminer seulement l'encre résiduelle ;
- et en ce que cette suspension désencrée issue de cette seconde flottation et contenant les matières restantes (fibres et charges) est ensuite mélangée à la pâte issue du lavage, avant que le mélange (14) ne soit envoyé dans le circuit de la pâte.

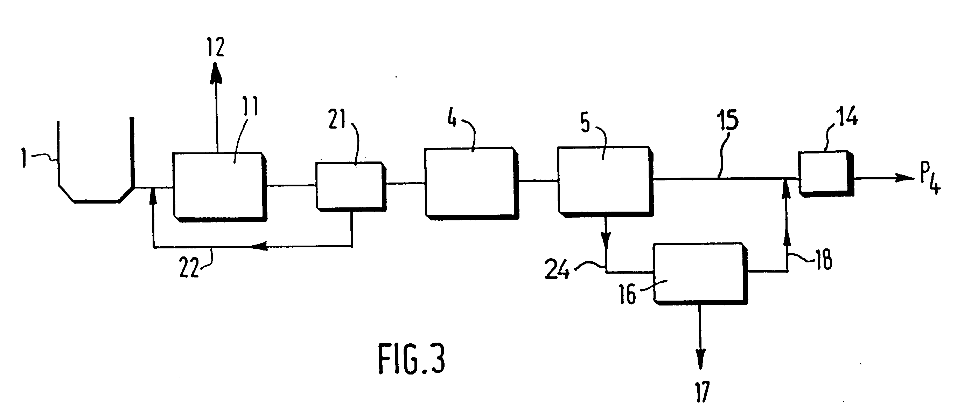

En d'autres termes, l'invention consiste (voir figure 3) à éliminer l'encre en deux temps. Tout d'abord, on élimine la majeure partie de l'encre dans une phase primaire conventionnelle (11), notamment par flottation. Puis après avoir lavé (5) la pâte désencrée pour en extraire l'encre résiduelle, on soumet les eaux (24) de ce lavage (5) à une flottation (16) dite secondaire, après quoi ces eaux sont réutilisées (18) pour diluer la pâte (15) précédemment lavée (5). Cette flottation secondaire peut être effectuée directement sur la pâte après la première flottation ou après le blanchiment ; dans ce cas, l'encombrement de l'installation serait importante puisqu'il faudrait traiter la totalité de la pâte. En revanche, si on effectue cette flottation sur les eaux de lavage, on peut ainsi réduire notablement l'encombrement de l'installation et améliorer également l'efficacité du traitement.

L'invention se distingue du procédé décrit dans le document EP-A-0187 909, d'une part, par le fait que l'encre issue de la première flottation est éliminée de suite du circuit, d'autre part par le fait que la seconde flottation est sélective et s'effectue seulement sur les eaux issues du lavage, donc sur des eaux contenant qu'une faible partie de l'encre mais toutes les matières réutilisables pour la fabrication d'un papier d'impression. De la sorte, les matières traitées sont à un niveau de blancheur permettant de les réintroduire dans la pâte lavée envoyée dans le circuit.

En pratique, l'opération de lavage est effectuée par épaississement sur une pâte partiellement désencrée dont la concentration à l'entrée est d'au moins 2%, de préférence 2,5%, ce qui permet d'obtenir en sortie une concentration supérieure à 4%, avantageusement d'au moins 10 % et plus. Ces concentrations évitent de manipuler des quantités excessives d'eau et comme déjà dit, permettent de réduire l'encombrement de l'installation.

On obtient de bons résultats lorsque les matières restantes (fibres, charges) entraînées avec les eaux de lavage sont de l'ordre de 10 à 30 %, de préférence entre 15 et 25 %.

On a observé que si après l'élimination primaire et avant le lavage, on effectuait un blanchiment, cette opération facilitait en outre le décrochage de l'encre résiduelle, puis sa mise en dispersion, et par là facilitait les opérations de lavage et de flottation secondaire.

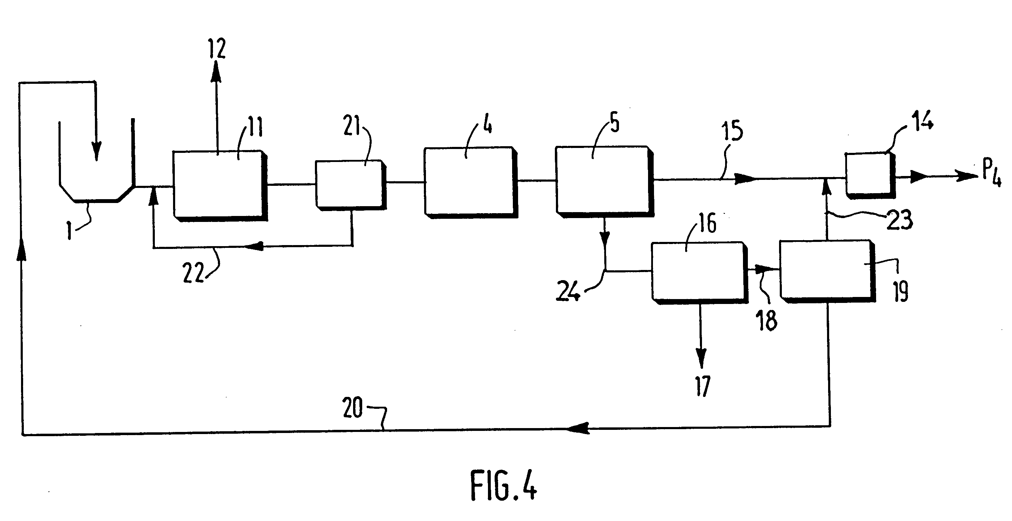

Dans une variante schématisée à la figure 4, les eaux flottées (18) de la flottation secondaire sont ensuite traitées pour séparer :

- d'une part, les matières en suspension (23) qui sont alors mélangées à la pâte lavée (15) ;
- d'autre part, les eaux (20) contenant les produits chimiques non consommés que l'on recycle alors en tête de l'installation, notamment au pulpeur.

La flottation secondaire caractéristique de l'invention s'effectue avec du matériel connu pour ce type de traitement. On peut utiliser par exemple une cellule classique à turbine, une cellule à injecteurs, une cellule à diffuseurs étagés ou n'importe quel type de dispositif de flottation sélective. Cette flottation sélective est réalisée sur des eaux (24) issues du lavage (5) de la pâte déjà débarrassée de la majeure partie de son encre. Ces eaux (24) ne contiennent donc que l'encre résiduelle. Le volume de ces eaux (24) est également plus faible que celui de la pâte. Cette opération de flottation sélective secondaire nécessite donc comme déjà dit un matériel plus petit, moins encombrant et entraînant de moindres investissements. De la sorte, le procédé se révèle beaucoup moins coûteux.

De même, on améliore l'efficacité de la flottation secondaire et par là la blancheur, si de manière connue on incorpore aux eaux de lavage à traiter des adjuvants appropriés.

Le procédé selon l'invention présente de nombreux avantages techniques et économiques par rapport à ceux cités dans le préambule. Tout d'abord, ce procédé s'intègre parfaitement et facilement dans toutes les chaines de désencrage par flottation existantes. Il ne nécessite pas l'apport d'eau supplémentaire de lavage. Enfin, entre l'entrée et la sortie de l'installation, la composition de la pâte n'est pas modifiée. Comme l'étape de flottation secondaire est effectuée seulement sur l'encre résiduelle extraite au lavage, les matières en suspension dans ces eaux ont une propreté comparable à celle de la pâte lavée produite et peuvent donc lui être incorporées, sans nuire à la blancheur finale.

En outre, ce procédé permet d'améliorer la blancheur des pâtes désencrées par flottation sans entraîner un accroissement important des pertes, puisque le traitement caractéristique de flottation secondaire, donc à pertes réduites, ne s'applique que sur une fraction des matières traitées dans l'installation.

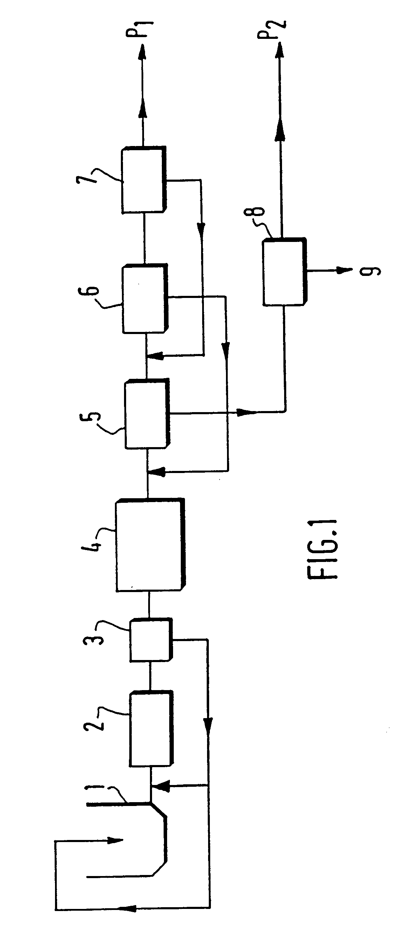

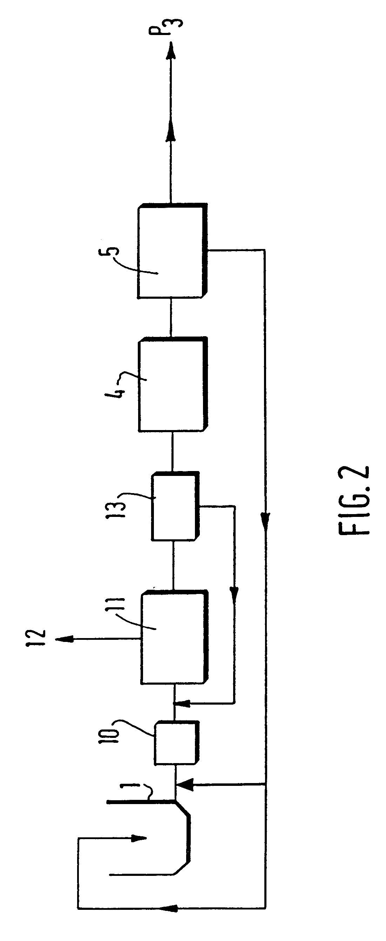

Comme déjà dit, les figures 1 et 2 schématisent les deux procédés selon l'art antérieur, exposés dans la description. En revanche, la figure 3 schématise une installation conforme à l'invention dans sa version simplifiée intégrée dans une chaine classique de désencrage, alors qu'une variante avec clarificateur est schématisée par la figure 4.

L'invention concerne également une installation, montrée aux figures 3 et 4, pour le traitement de recyclage de vieux papiers imprimés, du type comprenant dans l'ordre :

. un premier ensemble (1) de mise en suspension pâteuse de ces vieux papiers triturés pour décrocher l'encre des fibres,

. un second ensemble (11) d'élimination primaire, notamment par flottation, pour éliminer la majeure partie de l'encre (12) de la suspension traitée,

. un troisième ensemble (5) de lavage de la pâte,

. un quatrième ensemble (14) pour envoyer la pâte traitée P4 dans le circuit d'alimentation,

. un moyen pour effectuer une seconde flottation sur les eaux issues du troisième ensemble qui contiennent l'encre résiduelle,

caractérisée :

- en ce quelle comprend également :

. des moyens pour retirer du circuit l'encre éliminée dans le second ensemble,

. des moyens pour mélanger les matières restantes (fibres et charges) issues de la seconde flottation avec la pâte issue du lavage ;

- et en ce que le moyen de la seconde flottation est constitué par une cellule de flottation sélective.

Avantageusement, l'installation comprend également :

- un ensemble (4) pour blanchir la pâte désencrée, disposée entre le deuxième (11) et le troisième (5) ensembles ;

- un dispositif (voir figure 4) disposé après le poste de flottation secondaire (16), apte à séparer :

. les matières en suspension (fibres et charges) pour les mélanger (23) à la pâte lavée (14),

. les eaux contenant les produits chimiques non consommés que l'on recycle (20) en tête de l'installation (1).

La manière dont l'invention peut être réalisée et les avantages qui en découlent ressortiront mieux des exemples de réalisation qui suivent, donnés à titre indicatif et non limitatif, à l'appui des figures annexées.

Exemple 1 :

On utilise une installation schématisée à la figure 3.

De manière connue, on réalise un mélange de vieux papiers constitués par des brochures ordinaires imprimées. Ce mélange est constitué approximativement pour moitié de pâte chimique et pour moitié de pâte mécanique. La teneur en cendres de l'ensemble est voisine de 25 %.

Le traitement dans le premier ensemble pulpeur (1) est effectué en présence d'une composition de réactifs constitués par 1 % en poids d'hydroxyde de sodium, 2,5 % en poids de silicate de sodium, 0,6 % en poids d'acide gras et 1,0 % de peroxyde d'hydrogène. La température est maintenue aux environs de 45°C et la consistance de la pâte est voisine de 6 %.

Dans toute la description, les pourcentages donnés en poids sont calculés par rapport au poids de la pâte sèche.

Après défibrage dans le pulpeur (1) et dépastillage, la suspension est diluée, puis est envoyée dans l'ensemble de flottation primaire (11) pour éliminer l'encre en (12), par exemple dans deux cellules de flottation verticales. Les mousses de flottation sont éliminées en 12). La pâte est ensuite épaissie sur un filtre à vide (21). Cette pâte présente une blancheur de 57, mesurée comme toutes les blancheurs indiquées dans la description selon la norme AFNOR Q 03-039.

La pâte épaissie est diluée par addition d'eaux blanches et d'eau claire à une consistance de 4 %, puis est épaissie à 16 % sur une vis inclinée.

La blancheur de la pâte épaissie est alors de 60,5.

Les eaux (24) de l'épaississage sont ensuite flottées en continu dans une cellule (16) à injecteurs de LAMORT en présence d'un adjuvant approprié.

La blancheur des matières contenues dans les eaux d'épaississage est de 55 avant la flottation (16), mais de 59 après cette flottation.

La pâte finale P4 présente une blancheur de 60.

Exemple 2 :

On répète l'exemple 1.

Après la flottation primaire, la pâte est épaissie (21) sur filtre à vide, puis dans une presse à vis, de manière a ce que la consistance soit appropriée pour le blanchiment à haute consistance (4).

Après passage dans une vis mélangeuse et réchauffeuse, la pâte est envoyée dans la tour de blanchiment (4) où elle reçoit 2 % en poids de peroxyde d'hydrogène et 1 % d'hydroxyde de sodium, 2,5 % de silicate de sodium et 0,2 de stabilisant orgnophosphorique. Après un temps de latence dans la tour de blanchiment (4) de une heure à la température de 60°C, la pâte présente une blancheur de 61 mesurée selon la norme AFNOR Q 03-039.

Cette pâte traitée dans la tour de blanchiment (4) est diluée par addition d'eaux blanches et d'eau claire à une consistance de 4 %, puis est épaissie à 14 % sur une vis inclinée.

La blancheur de la pâte épaissie est alors de 65.

Les eaux de cet épaississage contiennent les réactifs de blanchiment non consommés ainsi que des fibres, des charges et de l'encre résiduelle.

Ces eaux (24) sont ensuite flottées en continu dans une cellule (16) à injecteurs de LAMORT en présence d'un adjuvant approprié.

La blancheur des matières contenues dans les eaux d'épaississage est de 56 avant la flottation (16), mais de 63 après cette flottation. La pâte finale P4 présente une blancheur de 64,5.

Exemple 3 :

On répète l'exemple 1, mais en utilisant cette fois une installation montrée à la figure 4.

Les eaux (18) ayant subi le traitement de flottation secondaire (16) sont ensuite traitées dans un clarificateur KROFTA (19) en présence de polyélectrolytes.

Deux fractions (20-23) sont ainsi récupérées. La première fraction (23) relativement concentrée (3 à 4 %) représente environ 80 % des matières contenues dans les eaux et a une blancheur de 63 %.

La seconde fraction claire (20) qui représente le reste, soit environ 20 %, concentrée à 0,25 %, contient une part importante de réactifs de blanchiment non consommés (0,6 g/l de peroxyde et 0,35 g/l de soude). Ces eaux clarifiées (20) sont recyclées dans le pulpeur (1).

La trituration au pulpeur (1) est réalisée en utilisant les eaux (20) précédemment récupérées dans le clarificateur KROFTA (19), sans addition complémentaire de peroxyde d'hydrogène et en limitant l'addition d'hydroxyde de sodium à 0,4 % et celle de silicate de sodium à 2 %.

En revanche, on mélange les matières récupérées (23) au clarificateur KROFTA (19) à la pâte blanchie

5

lavée (15).

On obtient ainsi une pâte P4 de blancheur 64,5, donc identique à celle de l'exemple 2.

Exemple 4 :

Dans une installation classique de désencrage montrée à la figure 3, on prépare une pâte blanchie (4) ayant une blancheur de 72.

On lave (5) cette pâte sur une vis inclinée avec épaississage de 4 a 16 %. On obtient alors une blancheur de 79 pour un rendement de 85 %.

Les matières contenues dans les eaux (24) de ce lavage représentent 15 % des matières totales et ont une blancheur de 68. Elles sont ensuite traitées dans une cellule de flottation classique VOITH en présence d'un adjuvant de flottation connu sous la dénomination PP22 de American Cyanamid à raison de 5 kg pour une tonne de matières sèches contenues dans les eaux. On obtient des eaux dont la blancheur des matières est de 78.

Les matières (18) obtenues après flottation secondaire (16) peuvent être incorporées à la pâte lavée (15) puisque les blancheurs sont très voisines pour donner une pâte unique P4 de blancheur 78,5.

Exemple 5 :

On répète l'exemple précédent en changeant la nature de l'agent de flottation. On utilise un agent tensio-actif, non ionique, commercialisé par SEPPIC sous la dénomination MONTACELL-F200.

On obtient des matières (18) dont la blancheur est de 78,5.

De la sorte, les pâtes respectivement primaires (15) et secondaires (18) peuvent être mélangées pour donner une pâte unique P4 de blancheur 79.

Exemple 6 :

On répète l'exemple 4 mais sur une pâte ayant une blancheur de 71 avant le lavage (5) et de 77 après lavage.

Les matières contenues dans les eaux (24) du lavage (5) représentent 15 % de la matière lavée et ont une blancheur de 67.

Après flottation secondaire (16) dans deux cellules à injecteurs LAMORT,placées en série en présence de 0,5 % d'agent de flottation PP22, on obtient en (18) une blancheur de 75. La pâte P4 résultante a une blancheur de 76,5.

Les pertes en flottation secondaire représentent 15 % de la matière contenue dans les eaux. Ainsi, les pertes finales sont donc seulement de 2,2 % pour un gain de blancheur de 5,5 points, ce qui est totalement inattendu car, avec le rejet total des eaux (24) de lavage (5), on aurait eu un gain supplémentaire de seulement 0,5 point de blancheur mais avec une perte de 15 % de matières.

Les résultats de tous ces exemples ont été rassemblés dans le tableu unique joint.

| blancheur / Exemples | pâte avant lavage | pâte lavée (15) | matières contenues dans les eaux (24) de lavage | matières contenues dans les eaux de lavage après flottation (18) | pâte finale P4 après mélange |
|---|---|---|---|---|---|
| Ex. 1 | 57 | 60,5 | 55 | 59 | 60 |
| Ex. 2 | 61 | 65 | 56 | 63 | 64,5 |
| Ex. 3 | 61 | 65 | 56 | 63 | 64,5 |
| Ex. 4 | 72 | 79 | 68 | 78 | 78,5 |
| Ex. 5 | 72 | 79 | 68 | 78,5 | 79 |
| Ex. 6 | 71 | 77 | 67 | 75 | 76,5 |

Le procédé selon l'invention présente de nombreux avantages par rapport à ceux décrits dans le préambule.

Par rapport à la demande de brevet EP-A-0092 124, on peut citer :
- le fait que la pâte traitée P4 a la même composition que la pâte initiale en (1) ;
- le fait d'être facilement intégrable dans une chaine de désencrage existante ;

- l'absence de pâtes secondaires P2 difficilement réutilisables ;
- une plus grande efficacité de désencrage, car la flottation secondaire s'effectue sur l'encre résiduelle et non sur la totalité de l'encre.

Par rapport au procédé décrit dans le brevet EP-A-00172 118, on peut citer l'absence de surcharge de matières dans les circuits amont, car les matières sont réincorporées en aval.

En d'autres termes, le procédé selon l'invention permet d'améliorer le gain de blancheur par un traitement de lavage (5) tout en limitant à un taux très faible les pertes de matières dues à celui-ci. En effet, la flottation secondaire (16) permet d'isoler l'encre résiduelle (17) dans un faible volume et de réincorporer (18 ou 23) à la pâte (15) la matière désencrée.

Le procédé et l'installation selon l'invention peuvent donc être utilisés avantageusement pour le traitement de recyclage de vieux papiers imprimés d'origines les plus variées, triés ou non.

**Revendications**

1.  Procédé pour améliorer la qualité des pâtes papetières désencrées, obtenues par recyclage de vieux papiers imprimés, dans lequel :
    .   on transforme lesdits papiers en une suspension pâteuse (1);
    .   on élimine sous forme de mousse (11) la majeure partie de l'encre (12) de cette suspension par une première flottation sélective de l'encre ;
    .   on lave (5) la pâte désencrée avant de l'envoyer dans le circuit d'installation (P4) de la pâte ;
    .   et on effectue une seconde flottation sur les eaux issues de ce lavage,
    caractérisé :
    -   en ce que on élimine du circuit les mousses (12) issues de la première flottation ;
    -   en ce que la seconde flottation est effectuée seulement sur les eaux (24) issues du lavage (5) au moyen d'une flottation sélective (16) pour éliminer seulement l'encre résiduelle (17) ;
    -   et en ce que cette suspension désencrée issue de cette seconde flottation et contenant les matières restantes (fibres et charges) (18,23) est ensuite mélangée à la pâte (15) issue du lavage (5), avant que le mélange (14) ne soit envoyé dans le circuit (P4) de la pâte.

2.  Procédé selon la revendication 1, caractérisé en ce que l'on effectue un blanchiment (4) entre l'élimination primaire (11) et le lavage (5).

3.  Procédé selon la revendication 2, caractérisé en ce que l'on traite ensuite les eaux (18) issues de la flottation secondaire (16) pour séparer :
    -   d'une part, les matières en suspension (23) qui sont alors mélangées à la pâte lavée (15);
    -   d'autre part, les eaux (20) contenant les produits chimiques non-consommés, que l'on recycle alors en tête de l'installation (1).

4.  Installation pour le traitement de recyclage de vieux papiers imprimés, du type comprenant, dans l'ordre :
    .   un premier ensemble (1) de mise en suspension pâteuse de ces vieux papiers triturés pour décrocher l'encre des fibres;
    .   un second ensemble (11) pour éliminer la majeure partie de l'encre (12) de la suspension traitée ;
    .   un troisième ensemble (5) de lavage de la pâte ;
    .   un quatrième ensemble pour envoyer la pâte traitée (P4) dans le circuit d'utilisation ;
    .   un moyen pour effectuer une seconde flottation sur les eaux issues du troisième ensemble (5) qui contiennent l'encre résiduelle,
    caractérisée en ce qu'eue comprend également :
    -   des moyens (12) pour retirer du circuit l'encre éliminée dans le second ensemble (11);
    -   des moyens pour mélanger les matières restantes (fibres et charges) (18,23) issues de la seconde flottation avec la pâte (15) issue du lavage (5);
    -   et en ce que le moyen de la seconde flottation est constitué par une cellule de flottation sélective.

5.  Installation selon la revendication 4, caractérisée en ce qu'elle comprend un cinquième ensemble de blanchiment (4) disposé entre le second (11) et le troisième (5) ensembles.

6.  Installation selon la revendication 5, caractérisée en ce qu'elle comprend également un dispositif (19) disposé de suite après le poste de flottation secondaire (16) apte à séparer :

- les matières en suspension (23) pour les mélanger à la pâte lavée (15);
- les eaux contenant les produits chimiques non consommés que l'on recycle (20) en tête de l'installation (1).

## Claims

1. Process for improving the quality of deinked papermaking pulps, obtained by recycling waste printed papers, comprising the steps of :
   - converting said papers into a slush pulp (1) ;
   - removing most of the ink (12) from this slush pulp as froth (11) by a selective primary flottation ;
   - washing (5) the deinked pulp before conveying into the circuit (P4) for utilization of the pulp ;
   - and proceeding with a selective secondary flottation on the waters from this washing ;
   **characterized** in the fact that :
   - removing from the circuit the froths (12) of the first flottation ;
   - the second flottation is only performed on the waters (24) originating from the washing (5) by means of a selective flottation (16) to remove only the residual ink (17) ;
   - this deinked pulp obtained from this secondary flottation and containing the remaining matter (fibers and fillers), (18,23) being subsequently mixed with the pulp (15) originating from the washing (5), before the mixture (14) is conveyed to the pulp circuit (P4).

2. Process according to claim 1, characterized in that it comprises a bleaching stage (4) between the primary flottation (11) and the washing (5).

3. Process according to claim 2, characterized in that the waters (18) obtained from the secondary flottation (16) are further separated to obtain :
   - on the one hand, the suspended matters (23) in order to mix them with the washed pulp (15) ;
   - on the other hand, the waters (20) containing the unconsumed chemical products, which are then recycled upstream at the head of the plant (1).

4. Plant for the treatment of recycling waste printed papers, of the type comprising, respectively :
   - a first unit (1) for producing a pulp suspension of these waste pulped papers to remove ink from the fibers ;
   - a second unit (11) for removing most of the ink (12) from the treated suspension ;
   - a third unit (5) for washing the pulp ;
   - a fourth unit for conveying the treated pulp (P4) into the utilization circuit ;
   - a means for performing a secondary flottation on the waters obtained from the third unit (5) containing the residual ink ;
   **characterized** in that it comprises :
   - means (12) for drawing from the circuit the eliminated ink into the second unit (11) ;
   - means for mixing the remaining matter (fibers and fillers), (18,23) originating from the secondary flottation with the pulp (15) originating from the washing (5); and,
   - the means of the secondary flottation is a selective flottation cell.

5. Plant according to claim 4, characterized in that it comprises a fifth unit (4) for bleaching arranged between the second (11) and the third (5) units.

6. Plant according to claim 5, characterized in that it comprises a device (19) arranged just after the secondary flottation station (16), entitled for separating :
   - the suspended matters (23) in order to mix them with the washed pulp (15) ; and,
   - the waters containing the unconsumed chemical products, which are recycled (20) upstream at the head of the plant (1).

## Patentansprüche

1. Verfahren zur Verbesserung der Qualität von de-inkten Altpapierstoff, die aus bedrucktem Altpapier wiedergewonnen werden, bei dem :
   - die besagten Papiere in eine breiartige Suspension überführt werden,
   - in Gestalt von Schaum (11) den größten Teil der Druckfarbe (12) dieser Suspension durch eine erst selektive Flotation der Druckfarbe entfernt wird,
- die de-inkte Suspension vor dem Einleiten in den Verarbeitungskreislauf (P4) gewaschen (5) wird, und
- eine zweite Flotation mit den aus diesem Waschen hervorgehenden Wassern durchgeführt wird, dadurch gekennzeichnet,
- daß aus dem Kreislauf die Schäume (12) entfernt werden, die in der ersten Flotation enstehen,
- daß die zweite Flotation nur mit den aus dem Waschen (5) hervorgehenden Wassern (24) mit Hilfe einer selektive Flotation (16) durchgeführt wird, um nur die residuelle Druckfarbe zu entfernen, und
- daß die aus dieser zweiten Flotation hervorgehende und die Restbestandteile (Fasern und Füllstoff) (18,23) enthaltende de-inkte Suspension anschließend mit der in dem Waschen (5) gewonnenen Stoff (15) vermischt wird, bevor die Mischung (14) in den Kreislauf (P4) gegeben wird.

2. Verfahren nach Anspruch 1, dadurch gekennzeichnet, daß zwischen der ersten Druckfarbenentfernung (11) und dem Waschen (5) ein Bleichen (4) durchgeführt wird.

3. Verfahren nach Anspruch 2, dadurch gekennzeichnet, daß die aus der zweiten Flotation (16) hervorgehenden Wasser (18) behandelt werden, um :
- die Bestandteile der Suspension (23), die dann dem gewaschenen Stoff (15) zugemischt werden, und ;
- die Wasser (20), die die nicht-verbrauchten Chemikalien enthalten, die dem Beginn der Anlage (1) wieder zugeführt werden, zu trennen.

4. Vorrichtung zur Wiedergewinnung von bedrucktem Altpapier mit, in Reihenfolge :
- einer erste Einrichtung (1) zur Herstellung einer breiartigen Suspension aus diesem Altpapier, um die Druckfarbe aus den Fasern zu lösen,
- einer zweiten Einrichtung (11), um den größten Teil der Druckfarbe (12) aus der behandelten Suspension zu entfernen,
- einer dritten Einrichtung (5) zum Waschen des Stoffes
- einer vierten Einrichtung, um den behandelten Stoff (P4) in den Verarbeitungskreislauf einzuspeisen,
- einem Mittel, um eine zweite Flotation auf den aus der dritten Einrichtung (5) stammenden Wassern durchzuführen , die die residuelle Druckfarbe enthalten ;
dadurch gekennzeichnet, daß sie ebenfalls enthält :
- Mittel (12), um die in der zweiten Einrichtung (11) entfernte Druckfarbe aus dem Kreislauf herauszunehmen,
- Mittel, um die aus dieser zweiten Flotation hervorgehende Restbestandteile (Fasern und Füllstoff) (18,23) mit der in dem Waschen (5) gewonnenen Masse (15) zu vermischen,
- und daß das Mittel der zweiten Schwimmaufbereitung durch eine der selektiven Flotationzelle gebildet wird.

5. Vorrichtung nach Anspruch 4, dadurch gekennzeichnet, daß sie eine fünfte Einrichtung zum Bleichen (4) umfaßt, die zwischen den zweiten (11) und dritten (5) Einrichtungen angeordnet ist.

6. Vorrichtung nach Anspruch 5, dadurch gekennzeichnet, daß sie ebenfalls eine Einrichtung (19) enthält, die direkt nach der Station der zweiten Flotationseinrichtung (16) angeordnet und geeignet ist, um :
- die Bestandteile der Suspension (23), die dann dem gewaschenen Stoff (15) zugemischt werden, und
- die Wasser (20), die die nicht-verbrauchen Chemikalien enthalten, die dem Beginn der Anlage (1) wieder zugeführt (20) werden, zu trennen.

FIG.1

FIG.2

FIG.3

FIG.4

EP 0 284 526 B1